(19) **Europäisches Patentamt**
**European Patent Office**
**Office européen des brevets**

(11) **EP 4 477 396 A2**

(12) # EUROPÄISCHE PATENTANMELDUNG

(43) Veröffentlichungstag:
**18.12.2024 Patentblatt 2024/51**

(21) Anmeldenummer: **24210089.9**

(22) Anmeldetag: **13.04.2021**

(51) Internationale Patentklassifikation (IPC):
***B29K 105/00*** *(2006.01)*

(52) Gemeinsame Patentklassifikation (CPC):
**B29C 45/261;** B29C 45/4225; B29K 2105/258;
B29K 2995/0094

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.04.2020 DE 102020110565**

(62) Dokumentnummer(n) der früheren Anmeldung(en) nach Art. 76 EPÜ:
**21719562.7 / 4 135 962**

(71) Anmelder: **MHT Mold & Hotrunner Technology AG 65239 Hochheim (DE)**

(72) Erfinder:
• **Wagner, Christian**
  **55126 Mainz (DE)**
• **Süß, Peter**
  **64409 Messel (DE)**
• **Tilsner, Christian**
  **64331 Weiterstadt (DE)**

(74) Vertreter: **WSL Patentanwälte Partnerschaft mbB Kaiser-Friedrich-Ring 98 65185 Wiesbaden (DE)**

Bemerkungen:
Diese Anmeldung ist am 31.10.2024 als Teilanmeldung zu der unter INID-Code 62 erwähnten Anmeldung eingereicht worden.

(54) **OPTIMIERTE SPRITZGIESSWERKZEUGPLATTE SOWIE SPRITZGIESSWERKZEUG MIT EINER SOLCHEN**

(57) Spritzgießmaschine mit einem Spritzgießwerkzeug mit einer Spritzgießwerkzeugplatte zur Herstellung einer Vielzahl v von Vorformlingen mit einer Mehrzahl von in Spalten und Reihen angeordneten Handhabungselementen, wobei der Abstand r zwischen benachbarten Handhabungselementen innerhalb der Reihen größer als der Abstand s zwischen benachbarten Handhabungselementen innerhalb der Spalten ist, wobei die Spritzgießmaschine zur gleichzeitigen Herstellung einer Vielzahl von PET-Vorformlingen vorgesehen ist und eine Schließkraft von weniger als 30 kN pro gleichzeitig herzustellendem PET-Vorformling auf die Spritzgießplatten aufbringt.

Fig. 1

EP 4 477 396 A2

**Beschreibung**

Die vorliegende Erfindung betrifft eine Spritzgießwerkzeugplatte zur Verwendung in einem Spritzgießwerkzeug zur Herstellung von Vorformlingen mit einer Vielzahl von in Spalten und Reihen angeordneten Handhabungselementen, wobei der Abstand r zwischen benachbarten Handhabungselementen innerhalb der Reihen größer als der Abstand s zwischen benachbarten Handhabungselementen innerhalb der Spalten ist.

Das Spritzgießen ist eines der wichtigsten Verfahren zur Herstellung von Kunststoffformteilen. Hier wird die im Allgemeinen ursprünglich als Pulver oder Granulat vorliegende Formmasse erhitzt, plastifiziert und unter hohem Druck in ein entsprechendes Formwerkzeug gedrückt. Die Formmasse erstarrt in dem Formwerkzeug und wird anschließend dem geöffneten Werkzeug entnommen. Beispielsweise werden handelsübliche PET-Flaschen durch Streckblasformen eines Hohlkörpervorformlings hergestellt. Dabei wird der Vorformling in einem ersten Schritt mittels Spritzgießen erstellt. Dass sich an den Spritzgießvorgang anschließende Streckblasformen kann entweder unmittelbar nach Herstellung des Vorformlings oder zu einem späteren Zeitpunkt erfolgen.

Bei der Herstellung der entsprechenden Spritzgießformen ist ein hoher Aufwand von Nöten, da die Spritzgießform einerseits für sehr hohe Drücke ausgelegt sein muss und andererseits entsprechend beheizte und/oder gekühlten Kanäle aufweisen muss. Damit verbunden ist ein hoher Verschleiß, der eine regelmäßige Aufarbeitung der Spritzgießwerkzeugplatte oder von deren Teilen erfordert, was die Kosten nach oben treibt.

Auch wenn die vorliegende Erfindung prinzipiell in Spritzgießwerkzeugen jeglicher Art verwendet werden könnte, wird sie im Folgenden anhand eines Spritzgießwerkzeuges zur Herstellung von PET-Vorformlingen beschrieben. Solche Spritzgießwerkzeuge weisen eine Vielzahl, z.B. 96, Kavitäten auf, in die entsprechend ausgebildete Werkzeugkerne eingeführt werden. Bei geschlossenem Werkzeug, d.h., wenn der Kern in die entsprechende Kavität eingesetzt ist, wird zwischen dem Kern einerseits und der Kavität andererseits ein Raum, der sogenannte Formraum gebildet. In diesen Raum wird dann der plastifizierte Kunststoff, d.h. in dem hier beschriebenen Beispiel PET, unter hohem Druck eingespritzt. Sobald der PET-Vorformling genügend abgekühlt ist, kann die Form geöffnet und der Vorformling entnommen werden. Um die Zykluszeiten, d.h. die Zeit von einem Spritzvorgang bis zu dem nächsten Spritzvorgang, zu reduzieren, ist es bereits üblich, den Vorformling zu einem sehr frühen Zeitpunkt aus der Form zu entnehmen, zu dem der Vorformling an seinen Außenflächen bereits fest ist, dessen innerer Bereich jedoch noch flüssig ist. In diesem Zustand wird der Vorformling im Allgemeinen in eine sogenannte Entnahmeplatte übergeben, die einen Satz aus Aufnahmekavitäten aufweist. Dabei umfasst der Aufnahmekavitätensatz so viele Aufnahmekavitäten wie das Werkzeug Kerne bzw. Kavitäten hat, sodass von jedem Kern der erstarrte Vorformling in eine Aufnahmekavität übergeben werden kann.

Bei der Herstellung von Vorformlingen weisen die Spritzgießwerkzeuge zwei Werkzeughälften auf, die zwischen einer offenen und einer geschlossenen Position hin und her bewegt werden können. Die eine Werkzeughälfte weist die sogenannte Kavitätenplatte auf, die eine Vielzahl von in Spalten und Reihen angeordnete Kavitäten hat, wobei der Abstand r zwischen benachbarten Kavitäten innerhalb der Reihen größer als der Abstand s zwischen benachbarten Kavitäten innerhalb der Spalten ist. Die andere Werkzeughälfte weist eine Kernplatte auf, die entsprechende Kerne aufweist, die im geschlossenen Zustand der Werkzeugform innerhalb der Kavitäten angeordnet sind. Daher sind auch die Kerne in einer Vielzahl von Spalten und Reihen angeordnet, wobei der Abstand r zwischen benachbarten Kernen innerhalb der Reihen größer als der Abstand s zwischen benachbarten Kernen innerhalb der Spalten ist. Sowohl die Kerne als auch die Kavitäten sind Handhabungselemente im Sinne der vorliegenden Erfindung. Handhabungselemente sind alle Elemente, die mit den Vorformlingen während der Herstellung oder der Entnahme oder der darauffolgenden Kühlung in Kontakt treten oder diese bearbeiten.

In der Regel erfolgt die Zufuhr der plastifizierten PET-Schmelze über Öffnungen im Boden der Kavitäten. Um die plastifizierte Schmelze gleichmäßig allen Kavitäten zuführen zu können, ist der Kavitätenplatte ein entsprechendes Heißkanalnetzwerk zugeordnet, welches meist in einer neben der Kavitätenplatte positionierten Heißkanalplatte angeordnet ist. Da der Anguss, d.h. der Punkt an dem die plastifizierte Schmelze der Heißkanalplatte zugeführt wird, in der Regel in der Mitte der Platte angeordnet ist, erstreckt sich das Heißkanalnetzwerk von dem Anguss zu jeder Kavität, wobei die Kanäle immer schmaler werden, je weiter sie von dem Anguss entfernt sind. In der Nähe des Angusses wird jedoch ein Abschnitt des Heißkanals einen relativ großen Querschnitt haben, sodass benachbarte Kavitäten nicht zu dicht nebeneinander angeordnet werden können.

Bei dem beschriebenen PET-Werkzeug wird deswegen häufig ein Abstand von etwa 140 mm zwischen dem Mittelpunkt einer Kavität und dem Mittelpunkt der in Reihenrichtung unmittelbar benachbarten Kavität eingehalten. Soweit im Einzelfall nichts anderes beschrieben wird, ist unter dem Abstand zwischen Handhabungselementen immer der Abstand zwischen dem Mittelpunkt eines Handhabungselementes und dem Mittelpunkt des anderen Handhabungselementes zu verstehen.

Grundsätzlich ist es gewünscht, möglichst viele Vorformlinge gleichzeitig mit einem Spritzgießwerkzeug herzustellen. Daher gibt es mittlerweile neben dem Werkzeug mit 96 Kavitäten beispielsweise auch Werkzeuge mit 128 Kavitäten oder sogar 144 Kavitäten. Da die entsprechenden Handhabungselemente in oder an Spritzgießwerkzeugplatten angeordnet sind, führt die Erhöhung der Kavitätenanzahl zu einer Schwächung der Spritzgießwerkzeugplatte. Der Abstand der Handhabungselemente innerhalb der Spalten beträgt bei den bekannten PET-Werkzeugen mindestens 50 mm. Der Abstand zwischen Handhabungselementen innerhalb der Spalten ist vorzugsweise mindestens doppelt so hoch, da in der Regel entsprechende Schieberelemente zum Öffnen der Halsbacken, die das Gewinde des Vorformlings bilden, zwischen den Spalten angeordnet werden müssen. Mit der Erhöhung der Kavitätenanzahl werden die Platten größer gewählt. So ist beispielsweise ein Werkzeug mit 144 Kavitäten bekannt, bei welchem der Abstand zwischen Handhabungselementen innerhalb der Spalten 50 mm beträgt und der Abstand innerhalb der Reihen 140 mm beträgt. Aufgrund der Größe der Spritzgießwerkzeugplatte muss auch der Heißkanal, d.h. der Kanal, durch welchen die flüssige Schmelze zugeführt wird, entsprechend lang gewählt werden.

Fast alle Kunststoffe und insbesondere Polyethylenterephthalat (PET) erfahren bei hohen Temperaturen eine thermische Schädigung. Häufig kommt es zu einer thermo-chemischen Spaltung der Moleküle. Es entstehen kurzkettige Spaltprodukte. Der Anteil an Spaltprodukten ist im Allgemeinen nicht nur von der Verarbeitungstemperatur, sondern auch vom Verarbeitungsdruck und der Verweilzeit abhängig. Gerade bei der Verwendung eines Heißkanalsystems besteht diese Gefahr insbesondere bei langen Zykluszeiten.

So entstehen beispielsweise durch die Erwärmung und die Plastifizierung von PET zwangsläufig geringe Mengen an Acetaldehyd. Dieses Acetaldehyd kann der fertige PET-Kunststoff, d.h. die PET-Flasche in die aufgenommene Flüssigkeit abgeben. Acetaldehyd ist in den hier üblicherweise auftretenden Konzentrationen gesundheitlich unbedenklich, zumal Acetaldehyd auch ein natürlicher Bestandteil von Früchten ist. Allerdings hat das Acetaldehyd einen Geruch, der beim Konsum der in der PET-Flasche aufbewahrten Flüssigkeit in der Regel nicht gewünscht ist. Insbesondere dann, wenn Mineralwasser in PET-Flaschen abgefüllt wird, akzeptiert der Verbraucher und damit auch der Flaschenhersteller nur eine sehr geringe Konzentration an Acetaldehyd.

Die Konzentration an Acetaldehyd in PET hängt jedoch von einer Vielzahl von unterschiedlichen Faktoren ab. So spielt nicht nur die Qualität des verwendeten Granulats eine Rolle, sondern beispielsweise auch die Druck- und Temperaturverhältnisse innerhalb der Schnecke, dem Heißkanal und dem eigentlichen Formwerkzeug. Insgesamt gibt es Dutzende von Parametern, die einen Einfluss auf die Verarbeitbarkeit der Schmelze und damit auch auf den Anteil der Spaltprodukte haben. Grundsätzlich müssen u. a. Temperatur, Druck und Verweildauer der plastifizierten Schmelze in Schnecke, Heißkanal und Formwerkzeug in Abhängigkeit von dem verwendeten Granulat in einem Verarbeitungsfenster gehalten werden, um die Verarbeitbarkeit der Schmelze zu gewährleisten und eine Schädigung zu vermeiden. Innerhalb des Verarbeitungsfensters können die Parameter variiert werden, ohne dass eine nennenswerte Verschlechterung der Verarbeitbarkeit festgestellt wird. Sehr wohl kann diese Variation aber den Anteil an Spaltprodukten beeinflussen. Daher müssen die Parameter optimiert werden, um die Acetaldehyd-Konzentration gering zu halten.

Es hat sich gezeigt, dass die Acetaldehyd-Konzentration in Vorformlingen, die mit einem Werkzeug mit 144 Kavitäten hergestellt worden sind, überraschenderweise größer ist als in Vorformlingen, die mit einem Werkzeug mit 72 Kavitäten hergestellt worden sind.

Ausgehend von dem beschriebenen Stand der Technik ist es daher Aufgabe der vorliegenden Erfindung ein Spritzgießwerkzeug bzw. eine Spritzgießwerkzeugplatte bereitzustellen, die eine hohe Anzahl von Vorformlingen in einem Zyklus herstellen kann, bei welcher dennoch die Acetaldehyd-Konzentration gering gehalten werden kann.

Erfindungsgemäß wird diese Aufgabe dadurch gelöst, dass der Abstand s kleiner als 50 mm beträgt.

Bei den bekannten Abständen von 50 mm und mehr kann es zwischen benachbarten Handhabungselementen innerhalb einer Spalte zu nicht vernachlässigbaren Druckunterschieden in der plastifizierten Schmelze kommen. Zudem treten kleine Temperaturunterschiede der plastifizierten Schmelze bei benachbarten Handhabungselementen innerhalb einer Spalte auf.

All dies wird durch den kleineren Abstand verringert. Zudem verkürzt sich die Verweilzeit der plastifizierten Schmelze im Heißkanal, da die Länge des Heißkanals verkürzt werden können.

Beste Erfahrungen wurden mit einem Abstandswert zwischen 44 und 46 mm gemacht. Noch kürzere Abstände führen zu keiner deutlichen Verbesserung.

Zwar führt die Verringerung des Abstandes der Handhabungselementen innerhalb der Spalten zu Schwierigkeiten bei der Montage der Handhabungselementen auf der Spritzgießwerkzeugplatte, die Anordnung führt jedoch zur Einsparung von 5 mm Länge je Abstand zwischen benachbarten Handhabungselementen innerhalb der Spalten. Sind beispielsweise bei einem 144-Fach-Werkzeug, d.h. einem Werkzeug mit 144 Kavitäten insgesamt 18 Handhabungselemente in einer Spalte angeordnet, so führt die erfindungsgemäße Maßnahme zu einer Reduktion der Länge der Spritzgießwerkzeugplatte um mindestens 90 mm.

In einer weiteren bevorzugten Ausführungsform ist vorgesehen, dass der Abstand r, d.h. der Abstand zwischen benachbarten Handhabungselementen innerhalb der Reihen kleiner als 140 mm, vorzugsweise kleiner als 120 mm und am besten zwischen 110 und 115 mm ist. Auch diese Maßnahme führte zu einer kompakteren Anordnung der einzelnen Handhabungselemente, was die beschriebenen Nachteile verringert.

In einer weiteren bevorzugten Ausführungsform ist vorgesehen, dass das Verhältnis r/s zwischen 2,4 und 2,8 und vorzugsweise zwischen 2,4 und 2,5 beträgt.

Es hat sich gezeigt, dass sich die Spritzgießwerkzeugplatten in geringem Maße durchbiegen. Diese Durchbiegung wird umso größer, je länger die Platte ist. Dies hat Auswirkungen auf die Handhabungselemente. Im Wesentlichen werden die Auswirkungen durch den Abstand zwischen den Handhabungselementen bestimmt. Je kleiner der Abstand zwischen den Handhabungselementen ist, umso weniger wirkt sich eine Durchbiegung der Werkzeugplatte auf benachbarte Handhabungselemente unterschiedlich aus. Daher sollten die Handhabungselemente Abstände innerhalb der Reihen haben, die kleiner als 2,8 mal so groß sind wie die Abstände innerhalb der Spalten, da ansonsten sich aufgrund der Durchbiegung der Platten Fehlanpassungen zwischen den einzelnen Handhabungselementen und den Elementen, mit denen diese Zusammenwirken ergeben.

In einer weiteren bevorzugten Ausführungsform ist vorgesehen, dass eine Reihe von Handhabungselementen durch zwei Reihengruppen von Handhabungselementen gebildet wird, wobei für den Abstand z zwischen den Reihengruppen von Handhabungselementen gilt:

$$z = r\left(1 + \frac{a}{n}\right),$$

wobei r der Abstand der Handhabungselemente innerhalb einer Reihengruppe ist und

$$n, a \in I\!N \text{ mit } n > 1,$$

wobei vorzugsweise a = 1 ist. $I\!N$ ist die Menge der natürlichen Zahlen (1, 2, 3...). Durch die Aufteilung der Handhabungselemente in zwei Reihengruppen können diese beiderseits des Angusses angeordnet werden, sodass innerhalb der Reihengruppen der Abstand zwischen den Handhabungselementen reduziert werden kann, während der Abstand z zwischen dem Handhabungselement der ersten Reihengruppe, welches der zweiten Reihengruppe am nächsten angeordnet ist und dem Handhabungselement der zweiten Reihengruppe, welches der ersten Reihengruppe von Handhabungselementen am nächsten angeordnet ist, größer gewählt wird.

In der Regel ist es zweckmäßig, dass a < n und vorzugsweise n < 5 und am besten n = 3 ist.

In einer bevorzugten Ausführungsform ist vorgesehen, dass jede Reihengruppe genau vier Handhabungselemente aufweist. Beispielsweise könnte der Abstand zwischen Handhabungselementen innerhalb der Reihengruppe 110 mm betragen, während der Abstand zwischen den beiden am nächsten stehenden Handhabungselementen der beiden verschiedenen Reihengruppen 148 mm (1 + 1/3) x 111 mm beträgt.

In einer weiteren bevorzugten Ausführungsform ist vorgesehen, dass eine Spalte von Handhabungselementen durch zwei oder drei Spaltengruppen von Handhabungselementen gebildet wird, wobei für den Abstand zs zwischen den Spaltengruppen von Handhabungselementen gilt zs ≥ 2s, wobei zs der Abstand der Handhabungselemente innerhalb einer Spaltengruppe ist. In einer bevorzugten Ausführungsform beträgt zs 95 mm.

Auch wenn die Abstände zwischen benachbarten Handhabungselementen unterschiedlicher Spaltengruppen größer sein können als der Abstand zwischen benachbarten Handhabungselementen innerhalb einer Spaltengruppe ist es in einer bevorzugten Ausführungsform von Vorteil, wenn der durchschnittliche Abstand $\bar{s}$ zwischen allen benachbarten Handhabungselementen innerhalb der Spalten kleiner als 50 mm ist.

Ebenso ist es in einer bevorzugten Ausführungsform von Vorteil, wenn der durchschnittliche Abstand $\bar{r}$ zwischen allen benachbarten Handhabungselementen innerhalb der Reihen kleiner als 120 mm ist.

Die Handhabungselemente greifen in Handhabungselemente benachbarter Spritzgießwerkzeugplatten ein. Daher haben Handhabungselementen in der Regel entsprechende Zentrierflächen, wie z.B. konische Abschnitte, die zu einer exakten Ausrichtung der Spritzgießwerkzeugplatte zu einer benachbarten Spritzgießwerkzeugplatte beitragen.

Wird der durchschnittliche Abstand der Handhabungselementen zu groß gewählt, kann es zu einer Durchbiegung der Spritzgießwerkzeugplatte kommen.

Die Handhabungselemente sind meist nicht gleichmäßig über die Spritzgießwerkzeugplatte verteilt. So gibt es in der Regel Randbereiche der Platte, in denen keine Handhabungselementen angeordnet sind. Eine entsprechende passgenaue Ausrichtung einer Spritzgießwerkzeugplatte zu der benachbarten Spritzgießwerkzeugplatte ist daher lediglich in dem Bereich von entscheidender Bedeutung, in welchem Handhabungselementen angeordnet sind. Dieser Bereich wird im folgenden als Arbeitsfläche bezeichnet. Alle Handhabungselementen sind dann entweder auf der Arbeitsfläche oder zumindest auf der Grenze der Arbeitsfläche angeordnet. Sind beispielsweise die Handhabungselementen auf einer rechteckigen Arbeitsfläche in Reihen und Spalten angeordnet, so ergibt sich der Flächeninhalt F der Arbeitsfläche durch den Abstand $r_{max}$ zwischen den am weitesten beanstandeten Handhabungselemente einer Reihe multipliziert mit dem Abstand $s_{max}$ zwischen den am weitesten beanstandeten Handhabungselementen einer Spalte.

In einer bevorzugten Ausführungsform ergibt sich für das Verhältnis der Anzahl t der Handhabungselemente zu dem Flächeninhalt $F: \frac{t}{F} > 175/m^2$ und vor-

zugsweise $\frac{t}{F} > 190/m^2$ .

Weiterhin ist es von Vorteil, wenn eine Spalte drei Spaltengruppen aufweist, wobei zwei Spaltengruppen jeweils genau vier Handhabungselemente aufweisen und eine Spaltengruppe genau fünf Handhabungselemente aufweist, wobei vorzugsweise die Spaltengruppe mit genau fünf Handhabungselementen zwischen den zwei Spaltengruppen mit jeweils genau vier Handhabungselementen angeordnet ist. Durch diese Verteilung der Handhabungselemente werden die Fließwege minimiert und die Kraftverteilung erfolgt gleichmäßig.

In einer weiteren bevorzugten Ausführungsform ist vorgesehen, dass das Verhältnis des Abstandes $r_{max}$ zwischen den am weitesten beabstandeten Handhabungselementen eine Reihe zu dem Abstand $s_{max}$ zwischen den am weitesten beabstandeten Handhabungselemente einer Spalte zwischen 0,9 und 1,1 vorzugsweise zwischen 0,93 und 1,07 und am besten zwischen 1 und 1,06 beträgt.

Es hat sich gezeigt, dass bei der Wahl dieses Verhältnisses die Kräfteverteilung innerhalb der Werkzeugplatte homogener ist.

In einer weiteren bevorzugten Ausführungsform ist vorgesehen, dass die Spritzgießwerkzeugplatte eine im Wesentlichen rechteckige Form hat, wobei in den Eckbereichen der Spritzgießwerkzeugplatte Ausnehmungen sind, die dafür vorgesehen sind, Holme einer Spritzgießmaschine aufzunehmen. Diese Ausnehmungen können z.B. seitlich offene Ausschnitte in der Werkzeugplatte oder Durchgangsbohrungen sein.

In einer weiteren bevorzugten Ausführungsform ist vorgesehen, dass die Handhabungselemente Kavitäten oder Kerne sind, deren Innen- bzw. Außenkontur der Außen- bzw. Innenkontur eines herzustellenden Vorformlings entspricht.

Hinsichtlich des Spritzgießwerkzeuges zur Herstellung von Vorformlingen wird die eingangs genannte Aufgabe dadurch gelöst, dass das Spritzgießwerkzeug eine Spritzgießwerkzeugplatte der beschriebenen Art, die als Kernplatte ausgebildet ist, und eine weitere Spritzgießwerkzeugplatte der eingangs beschriebenen Art, die als Kavitätenplatte ausgebildet ist, aufweist, wobei die Kavitätenplatte und die Kernplatte relativ zueinander zwischen einer geschlossenen Position und einer geöffneten Position hin und her bewegbar sind, wobei in der geschlossenen Position die als Kerne ausgebildeten Handhabungselemente der Kernplatte in die als Kavitäten ausgebildeten Handhabungselemente der Kavitätenplatte eingesetzt sind, wodurch sich zwischen Kernen einerseits und Kavitäten andererseits Formräume bilden, deren Innenkontur der Außenkontur der herzustellenden Vorformlinge entspricht.

Des Weiteren weist das Spritzgießwerkzeug eine Entnahmeplatte zur Entnahme von Vorformlingen aus der Kernplatte auf, wobei die Entnahmeplatte vorzugsweise Aufnahmehülsen aufweist, wobei die Entnahmeplatte zwischen einer Außenposition, in der die Entnahmeplatte nicht zwischen der Kavitätenplatte und der Kernplatte angeordnet ist, und mindestens einer Entnahmepositionen, in der die Entnahmeplatte zwischen der Kavitätenplatte und der Kernplatte angeordnet ist, hin und her bewegt werden kann, und eine als Nachbehandlungsplatte ausgebildete Spritzgießwerkzeugplatte der eingangs genannten Art auf, wobei bei der Nachbehandlungsplatte die Handhabungselemente Entnahmeelemente, vorzugsweise Entnahmestifte, zur Entnahme der Vorformlinge aus der Entnahmeplatte sind.

In einer bevorzugten Ausführungsform ist das Spritzgießwerkzeug in einer Spritzgießmaschine aufgenommen, welche vier Holme aufweist, die auf vier Eckpunkten eines Rechteckes angeordnet sind, wobei die Kernplatte und die Kavitätenplatte und vorzugsweise auch die daran vorgesehenen Handhabungselemente zwischen den vier Holmen angeordnet sind.

Dabei ist es von Vorteil, wenn die lichte Breite zwischen zwei Holmen, die auf benachbarten Eckpunkten des Rechteckes angeordnet sind weniger als 1.000 mm beträgt und auf sowohl der Kernplatte als auch der Kavitätenplatte mindestens 136, vorzugsweise mindestens 144 Handhabungselemente angeordnet sind.

In einer alternativen Ausführungsform ist von Vorteil, wenn die lichte Breite zwischen zwei Holmen, die auf benachbarten Eckpunkten des Rechteckes angeordnet sind weniger als 800 mm beträgt und auf sowohl der Kernplatte als auch der Kavitätenplatte mindestens 120, vorzugsweise mindestens 128 Handhabungselemente angeordnet sind.

In einer alternativen Ausführungsform ist von Vorteil, wenn die lichte Breite zwischen zwei Holmen, die auf benachbarten Eckpunkten des Rechteckes angeordnet sind weniger als 750 mm beträgt und auf sowohl der Kernplatte als auch der Kavitätenplatte mindestens 88, vorzugsweise mindestens 96 Handhabungselemente angeordnet sind.

Durch die hohe Anzahl von Handhabungselementen auf der Arbeitsfläche werden die Kräfte, die die Spritzgießwerkzeugplatten aufeinander ausüben minimiert, da jedes einzelne Handhabungselement eine Zentrierfunktion ausübt. Daher kann die Spritzgießwerkzeugplatte in einer bevorzugten Ausführungsform mit einer Spritzgießmaschine betrieben werden, die eine deutlich geringere Schließkraft auf die Spritzgießwerkzeugplatten und damit auf die Handhabungselemente aufbringen. So ist in einer bevorzugten Ausführungsform vorgesehen, dass eine Schließkraft von weniger als 30 kN pro gleichzeitig herzustellenden Vorformling auf die Spritzgießplatten aufgebracht wird.

In einer bevorzugten Ausführungsform wird allerdings eine Schließkraft von mehr als 20 kN pro gleichzeitig herzustellenden Vorformling auf die Spritzgießplatten aufgebracht.

Dies hat gleich eine ganze Reihe von Vorteilen. Grundsätzlich muss die Schließkraft ausreichend sein, um das Spritzgießwerkzeug beim Formteilbildungsprozess zuzuhalten. Ist die Schließkraft zu gering, so öffnet sich das Werkzeug, d.h. die Spritzgießwerkzeugplatten bewegen sich während der Einspritz- und/oder Nachdruckphase auseinander oder öffnen sich, wodurch es zu einer Gratbildung am Vorformling kommen kann. Die Schließkraft darf daher nicht zu niedrig gewählt werden. Allerding wird durch eine niedrige Schließkraft Energie eingespart. Zudem ist der Verschleiß am Werkzeug geringer.

Weitere Vorteile, Merkmale und Anwendungsmöglichkeiten der vorliegenden Erfindung werden deutlich anhand der folgenden Beschreibung bevorzugter Ausführungsformen. Es zeigen:

Figur 1     eine schematische Darstellung einer ersten erfindungsgemäßen Werkzeugplatte,

Figur 2     eine schematische Darstellung einer zweiten erfindungsgemäßen Werkzeugplatte,

Figur 3     eine schematische Darstellung einer dritten erfindungsgemäßen Werkzeugplatte,

Figur 4     eine schematische Darstellung der Druckverhältnisse zwischen den Handhabungselementen,

Figur 5     eine schematische Darstellung der Abstände bei einer Verbiegung der Werkzeugplatten und

Figur 6     eine schematische Darstellung der Situation bei einer Verkippung der Werkzeugplatten.

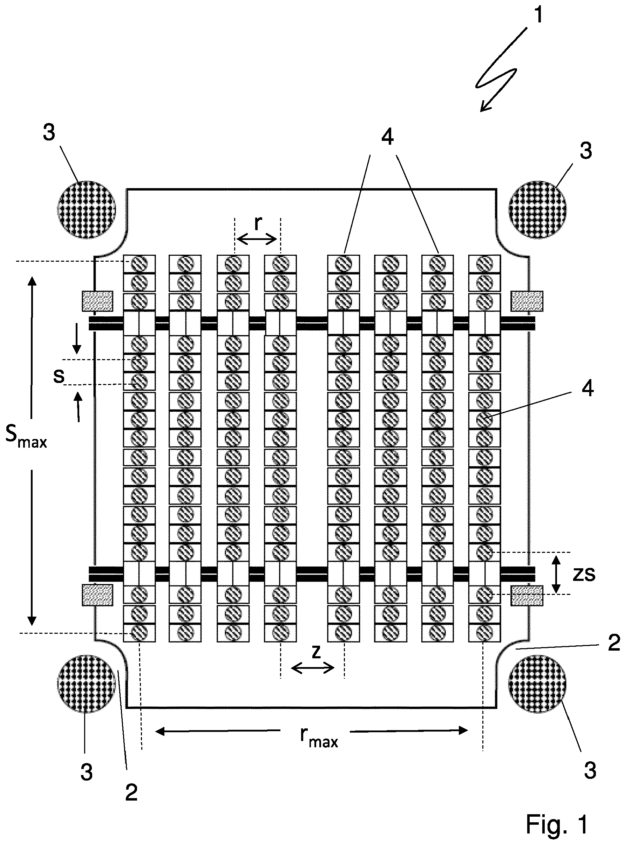

In Figur 1 ist eine schematische Darstellung einer ersten erfindungsgemäßen Werkzeugplatte 1 gezeigt. Die Werkzeugplatte 1 hat eine im Wesentlichen rechteckige Form mit Ausnehmungen 2 in den Eckbereichen. Diese Ausnehmungen dienen dazu, Platz für Holme 3 einer Spritzgießmaschine zu schaffen. Die Holme 3 sind nicht Teil der Spritzgießwerkzeugplatte sind aber dennoch in der Figur 1 dargestellt.

Die Spritzgießwerkzeugplatte 1 weist eine Vielzahl, nämlich 144, von Handhabungselementen auf, die als Kreise dargestellt sind. Die Handhabungselemente 4 sind in Reihen, die in der Figur waagerecht dargestellt sind, und in Spalten, die in der Figur senkrecht dargestellt sind, angeordnet.

Innerhalb der Spalten haben die Handhabungselemente 4 einen Abstand s voneinander, der bei der gezeigten Ausführungsform 45 mm beträgt. Innerhalb der Reihen ist der Abstand zwischen den Handhabungselementen 4 mit r bezeichnet und beträgt bei der gezeigten Ausführungsform 111 mm.

In einer Reihe sind insgesamt acht Handhabungselemente 4 angeordnet. In der gezeigten Ausführungsform sind die acht Handhabungselemente 4 in einer Reihe durch zwei Reihengruppen bestehend aus jeweils vier Handhabungselementen 4 gebildet. Zwischen den beiden Reihengruppen ist der Abstand z größer als der Abstand innerhalb der Reihengruppen. Bei der gezeigten Ausführungsform beträgt der Abstand z 148 mm.

Der Abstand zwischen den beiden äußeren Handhabungselementen 4 einer Reihe ist in der Zeichnung mit $r_{max}$ bezeichnet und beträgt in der gezeigten Ausführungsform 814 mm.

In Spaltenrichtung sind jeweils drei Spaltengruppen, die jeweils aus mehreren Handhabungselementen 4 bestehen, vorgesehen. Zwei Spaltengruppen, nämlich die in der Figur oben und unten angezeigte Spaltengruppe weisen jeweils genau drei Handhabungselemente auf, während die mittlere Spaltengruppe zwölf Handhabungselemente aufweist. Da der Abstand zwischen benachbarten Handhabungselementen innerhalb der Spaltengruppen jeweils gleich ist und 45 mm beträgt, ist der Abstand zwischen benachbarten Spaltengruppen zs mindestens doppelt so groß. In der gezeigten Ausführungsform ist er 50 mm größer als der Abstand zwischen benachbarten Handhabungselementen innerhalb der Spaltengruppen, d.h. er beträgt insgesamt 95 mm. Daraus ergibt sich ein Abstand zwischen den beiden äußersten Handhabungselementen 4 einer Spalte, der in der Zeichnung mit $s_{max}$ bezeichnet ist, von 865 mm.

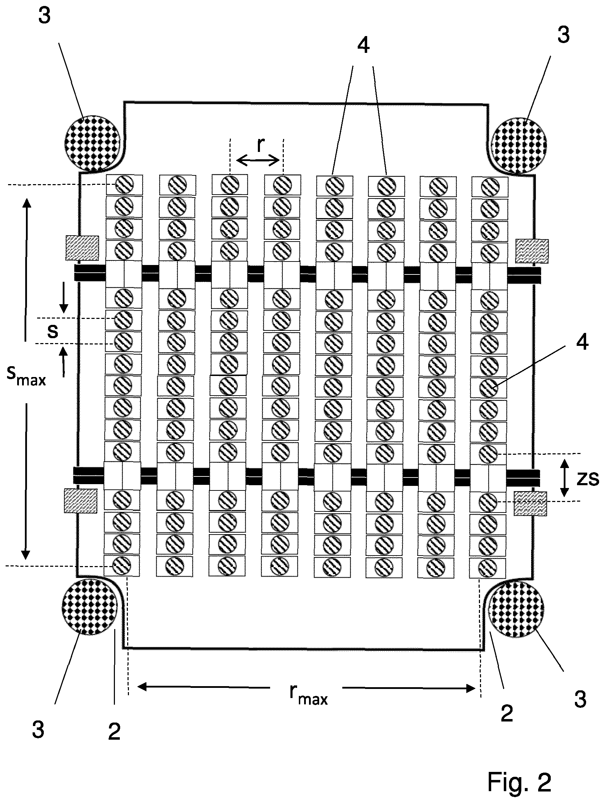

In Figur 2 ist eine zweite Ausführungsform einer Werkzeugplatte gezeigt. Diese Ausführungsform weist lediglich 128 Handhabungselemente auf, die in 8 Spalten und 16 Reihen angeordnet sind. Die Reihen weisen hier nur eine Reihengruppe von Handhabungselementen auf. In Spaltenrichtung sind jeweils drei Spaltengruppen, die jeweils aus mehreren Handhabungselementen 4 bestehen, vorgesehen. Zwei Spaltengruppen, nämlich die in der Figur 2 oben und unten angezeigten Spaltengruppen weisen jeweils genau vier Handhabungselemente auf, während die mittlere Spaltengruppe acht Handhabungselemente aufweist.

Der Abstand zwischen den beiden äußeren Handhabungselementen 4 einer Reihe ist in der Zeichnung mit $r_{max}$ bezeichnet und beträgt in der gezeigten Ausführungsform 777 mm.

In Spaltenrichtung sind jeweils drei Spaltengruppen, die jeweils aus mehreren Handhabungselementen 4 bestehen, vorgesehen. Zwei Spaltengruppen, nämlich die in der Figur oben und unten angezeigte Spaltengruppe weisen jeweils genau drei Handhabungselemente auf, während die mittlere Spaltengruppe zwölf Handhabungselemente aufweist. Da der Abstand zwischen benachbarten Handhabungselementen innerhalb der Spaltengruppen jeweils gleich ist und 45 mm beträgt, ist der Abstand zwischen benachbarten Spaltengruppen zs mindestens doppelt so groß. In der gezeigten Ausführungsform ist er 50 mm größer als der Abstand zwischen benachbarten Handhabungselementen innerhalb der Spaltengruppen, d.h. er beträgt insgesamt 95 mm. Daraus ergibt sich ein Abstand zwischen den beiden äußersten Handhabungselementen 4 einer Spalte, der in der Zeichnung mit $s_{max}$ bezeichnet ist, von 775 mm.

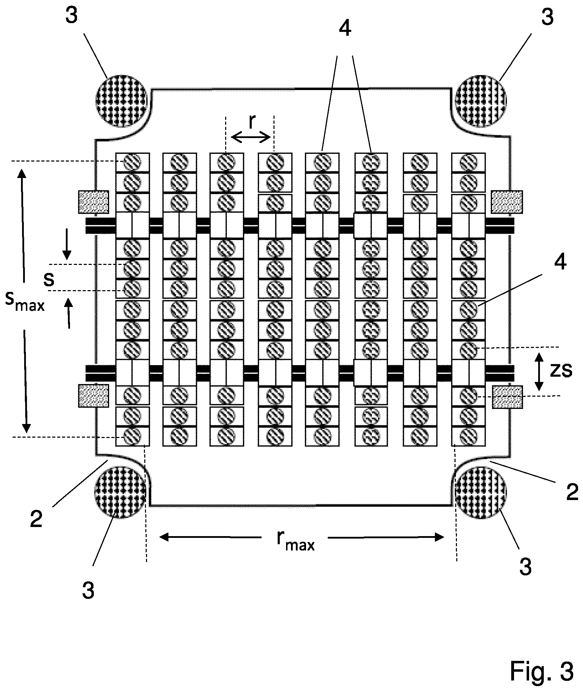

In Figur 3 ist eine dritte Ausführungsform einer Werkzeugplatte gezeigt. Diese Ausführungsform weist lediglich 96 Handhabungselemente auf, die in 8 Spalten und 12 Reihen angeordnet sind. Die Reihen weisen hier nur eine Reihengruppe von Handhabungselementen auf. In Spaltenrichtung sind jeweils drei Spaltengruppen, die jeweils aus mehreren Handhabungselementen 4 bestehen, vorgesehen. Zwei Spaltengruppen, nämlich die in der Figur 3 oben und unten angezeigten Spaltengruppen weisen jeweils genau drei Handhabungselemente auf, während die mittlere Spaltengruppe sechs Handhabungselemente aufweist.

Der Abstand zwischen den beiden äußeren Handhabungselementen 4 einer Reihe ist in der Zeichnung mit $r_{max}$ bezeichnet und beträgt in der gezeigten Ausführungsform 777 mm.

In Spaltenrichtung sind jeweils drei Spaltengruppen, die jeweils aus mehreren Handhabungselementen 4 bestehen, vorgesehen. Zwei Spaltengruppen, nämlich die in der Figur oben und unten angezeigte Spaltengruppe weisen jeweils genau drei Handhabungselemente auf, während die mittlere Spaltengruppe zwölf Handhabungselemente aufweist. Da der Abstand zwischen benachbarten Handhabungselementen innerhalb der Spaltengruppen jeweils gleich ist und 45 mm beträgt, ist der Abstand zwischen benachbarten Spaltengruppen zs mindestens doppelt so groß. In der gezeigten Ausführungsform ist er 50 mm größer als der Abstand zwischen benachbarten Handhabungselementen innerhalb der Spaltengruppen, d.h. er beträgt insgesamt 95 mm. Daraus ergibt sich ein Abstand zwischen den beiden äußersten Handhabungselementen 4 einer Spalte, der in der Zeichnung mit $s_{max}$ bezeichnet ist, von 595 mm.

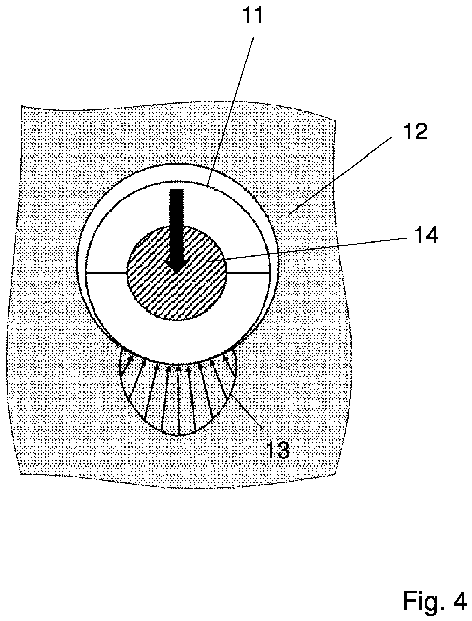

In Figur 4 sind die Druckverhältnisse zwischen Handhabungselementen benachbarter Spritzgießwerkzeugplatten dargestellt. Weist eine Spritzgießwerkzeugplatte einen Halsring 11 und einen Kern 14 und die benachbarte Spritzgießwerkzeugplatte eine Kavität 12 auf, in welche der Kern 14 eindringt, um den Formraum zu bilden und sind die beiden Werkzeugplatten zueinander in Pfeilrichtung verschoben, so erfolgt die Zentrierung der Handhabungselemente beim Schließen des Spritzgießwerkzeuges über entsprechend korrespondierend zueinander ausgeführte konische Abschnitte des Neckrings 11 und der Kavität. Aufgrund des Versatzes (dargestellt durch den Pfeil) werden die konischen Abschnitte immer an der gleichen Stelle aufeinander treffen und es kommt zu einer erhöhten Pressung in einem Bereich 13.

Aufgrund der erfindungsgemäßen Maßnahmen kann der Versatz deutlich reduziert werden, so dass der Verschleiß reduziert werden kann.

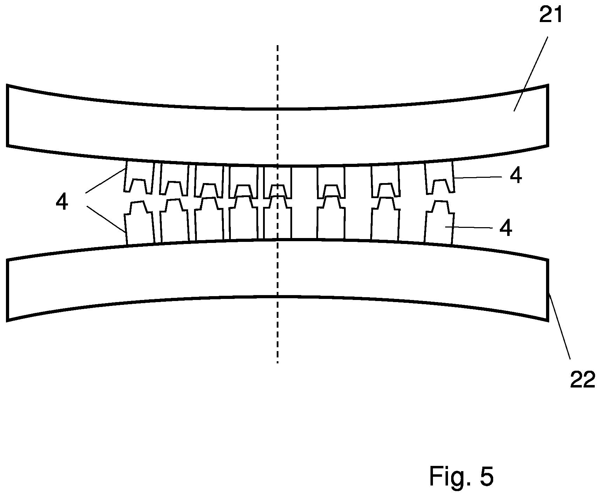

In Figur 5 ist eine schematische Darstellung zweier nebeneinander angeordneter Spritzgießwerkzeugplatten 21, 22 gezeigt. Beide Spritzgießwerkzeugplatten 21, 22 weisen entsprechende Handhabungselemente 4 auf. Auf der rechten Seite der Figur sind größere Abstände zwischen den Handhabungselementen 4 vorgesehen, wie dies im Stand der Technik der Fall ist. Auf der linken Seite sind die Abstände zwischen den einzelnen Handhabungselementen 4 erfindungsgemäß reduziert. Dadurch werden mehr Stützpunkte durch die Handhabungselemente 4 zur Verfügung gestellt, sodass es zu einer geringeren durch Biegung der Spritzgießwerkzeugplatten kommt. In der Figur ist die Durchbiegung der Spritzgießwerkzeugplatten deutlich überzeichnet. Tatsächlich ist die Durchbiegung so gering, dass sie mit bloßem Auge kaum zu erkennen ist.

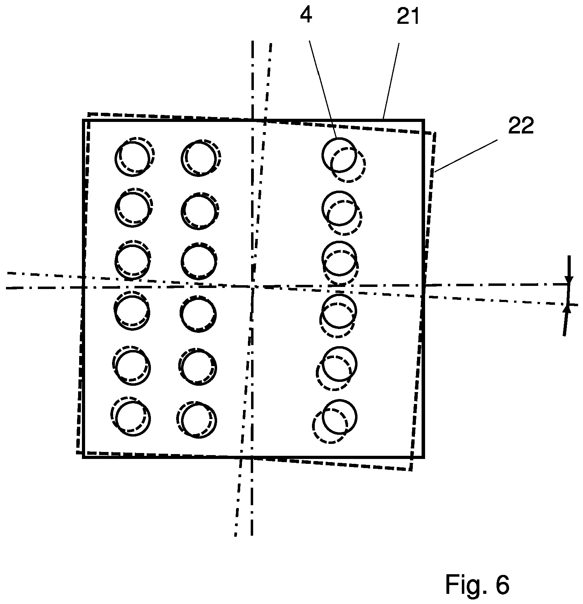

In Figur 6 ist eine schematische Darstellung zweier übereinander angeordneter Spritzgießwerkzeugplatten 21, 22 dargestellt. Aufgrund des Eigengewichtes der Spritzgießwerkzeugplatten und aufgrund von thermischen Effekten kann es zu einer Verkippung, d. h. zu einer Drehung einer Spritzgießwerkzeugplatte 21 gegenüber einer anderen Spritzgießwerkzeugplatte 22 (gestrichelt dargestellt) um eine Achse, die senkrecht auf den Spritzgießwerkzeugplatten steht, kommen.

Im rechten Teil der Figur sind die Abstände zwischen den Handhabungselementen größer gewählt als im linken Teil der Figur. Man erkennt, dass aufgrund der größeren Anzahl von Handhabungselementen ist im linken Teil der Figur zu einer weniger stark ausgeprägten Verkippung der Platten zueinander kommt.

Durch die erfindungsgemäßen Maßnahmen kann daher die Durchbiegung und die Verkippung der Spritzgießwerkzeugplatten verringert werden.

## Bezugszeichen

| 1 | Spritzgießwerkzeugplatte |
|----|--------------------------|
| 2 | Ausnehmung |
| 3 | Holme |
| 4 | Handhabungselement |
| 11 | Halsring |
| 12 | Kavität |
| 13 | Bereich |
| 14 | Kern |
| 21 | Spritzgießwerkzeugplatte |
| 22 | Spritzgießwerkzeugplatte |

## Patentansprüche

1. Spitzgießmaschine mit einem Spritzgießwerkzeug zur Herstellung von Vorformlingen mit einer als Kernplatte ausgebildeten Spritzgießwerkzeugplatte und einer als Kavitätenplatte ausgebildeten Spritzgießwerkzeugplatte, wobei die Kavitätenplatte und die Kernplatte relativ zueinander zwischen einer geschlossenen Position und einer geöffneten Position hin- und her bewegbar sind, wobei in der geschlossenen Position als Kerne ausgebildete Handhabungselemente der Kernplatte in als Kavitäten ausgebildete Handhabungselemente der Kavitätenplatte eingesetzt sind, wodurch sich zwischen Kernen einerseits und Kavitäten andererseits Formräume bilden, deren Innenkontur der Außenkontur der herzustellenden Vorformlingen entspricht, einer Entnahmeplatte zur Entnahme von Vorformlingen aus der Kernplatte, wobei die Entnahmeplatte zwischen einer Außenposition, in der die Entnahmeplatte nicht zwischen der Kavitätenplatte und der Kernplatte angeordnet ist, und mindestens zwei Entnahmepositionen, in denen die Entnahmeplatte zwischen der Kavitätenplatte und der Kernplatte angeordnet ist, hin- und herbewegt werden kann, und einer als Nachbehandlungsplatte ausgebildeten Spritzgießwerkzeugplatte mit einer Mehrzahl von in Spalten und Reihen angeordneten Handhabungselementen, wobei der Abstand r zwischen benachbarten Handhabungselementen innerhalb der Reihen größer als der Abstand s zwischen benachbarten Handhabungselementen innerhalb der Spalten ist, und der Abstand s kleiner als 50 mm ist, wobei bei der Nachbehandlungsplatte die Handhabungselemente Entnahmeelemente vorzugsweise Entnahmestifte, zur Entnahme der Vorformlinge aus der Entnahmeplatte sind, wobei die als Kern- oder Kavitätenplatte ausgebildete Spritzgießwerkzeugplatte zur Herstellung einer Vielzahl v von Vorformlingen mit einer Mehrzahl von in Spalten und Reihen angeordneten Handhabungselementen vorgesehen ist, wobei die Handhabungselemente Kavitäten oder Kerne sind, deren Innen- bzw. Außenkontur der Außen- bzw. Innenkontur eines herzustellenden Vorformlings entspricht, wobei der Abstand r zwischen benachbarten Handhabungselementen innerhalb der Reihen größer als der Abstand s zwischen benachbarten Handhabungselementen innerhalb der Spalten ist, wobei der Abstand s kleiner als 50 mm ist, **dadurch gekennzeichnet, dass** die Spritzgießmaschine zur gleichzeitigen Herstellung einer Vielzahl von PET-Vorformlingen vorgesehen ist und eine Schließkraft von weniger als 30 kN pro gleichzeitig herzustellendem PET-Vorformling auf die Spritzgießplatten aufbringt.

2. Spritzgießmaschine nach Anspruch 1, **dadurch gekennzeichnet, dass** der Abstand r kleiner als 140 mm, vorzugsweise kleiner als 120 mm und am besten zwischen 110 und 115 mm ist.

3. Spritzgießwerkmaschine nach Anspruch 1 oder Anspruch 2, **dadurch gekennzeichnet, dass** das Verhältnis r/s zwischen 2,4 und 2,8 und vorzugsweise zwischen 2,4 und 2,5 beträgt.

4. Spritzgießmaschine nach einem der Ansprüche 1-3, **dadurch gekennzeichnet, dass** eine Reihe von Handhabungselementen durch zwei Reihengruppen von Handhabungselementen gebildet wird, wobei für den Abstand z zwischen den Reihengruppen von Handhabungselementen gilt, $z = r(1 + \frac{a}{n})$
wobei r der Abstand der Handhabungselemente innerhalb einer Reihengruppe ist und $n, a \in IN$ mit n

> 1, wobei vorzugsweise a=1 ist.

5. Spritzgießmaschine nach Anspruch 4, **dadurch gekennzeichnet, dass** $a < n$ und vorzugsweise n<5 und am besten n=3 ist.

6. Spritzgießmaschine nach Anspruch 4 oder 5, **dadurch gekennzeichnet, dass** jede Reihengruppe genau vier Handhabungselemente aufweist.

7. Spritzgießmaschine nach einem der Ansprüche 1 bis 6, **dadurch gekennzeichnet, dass** eine Spalte von Handhabungselementen durch zwei oder drei Spaltengruppen von Handhabungselementen gebildet wird, wobei für den Abstand zs zwischen den Spaltengruppen von Handhabungselementen gilt zs $\geq$ 2s, wobei s der Abstand der Handhabungselemente innerhalb einer Spaltengruppe ist.

8. Spritzgießmaschine nach einem der Ansprüche 1 bis 7, **dadurch gekennzeichnet, dass** der durchschnittliche Abstand $\bar{s}$ zwischen allen benachbarten Handhabungselementen innerhalb der Spalten kleiner als 50 mm ist.

9. Spritzgießmaschine nach einem der Ansprüche 1 bis 8, **dadurch gekennzeichnet, dass** der durchschnittliche Abstand $\bar{r}$ zwischen allen benachbarten Handhabungselementen innerhalb der Reihen kleiner als 120 mm ist.

10. Spritzgießmaschine nach einem der Ansprüche 1 bis 9, **dadurch gekennzeichnet, dass** die Spritzgießwerkzeugplatte eine Arbeitsfläche mit einem Flächeninhalt F aufweist, wobei alle Handhabungselemente entweder innerhalb der Arbeitsfläche oder auf der Grenze der Arbeitsfläche angeordnet sind, wobei die Anzahl der Handhabungselemente t beträgt und das Verhältnis das Verhältnis $\frac{t}{F} > 175/m^2$ und vorzugsweise Verhältnis $\frac{t}{F} > 190/m^2$ beträgt.

11. Spritzgießmaschine nach Anspruch 7 oder 8, **dadurch gekennzeichnet, dass** eine Spalte drei Spaltengruppen aufweist, wobei vorzugsweise entweder

- zwei Spaltengruppen jeweils genau drei Handhabungselemente aufweisen und eine Spaltengruppe genau zwölf Handhabungselemente aufweist, wobei die Spaltengruppe mit genau zwölf Handhabungselementen zwischen den zwei Spaltengruppen mit jeweils genau drei Handhabungselementen angeordnet ist, oder
- zwei Spaltengruppen jeweils genau vier Handhabungselemente aufweisen und eine Spaltengruppe genau acht Handhabungselemente aufweist, oder

- zwei Spaltengruppen jeweils genau drei Handhabungselemente aufweisen und eine Spaltengruppe jeweils sechs Handhabungselemente aufweist.

12. Spritzgießmaschine nach einem der vorhergehenden Ansprüche, wobei die Spritzgießwerkzeugplatte eine im Wesentlichen rechteckige Form hat, wobei in den Eckbereichen der Spritzgießwerkzeugplatte Ausnehmungen sind, die dafür vorgesehen sind, Holme einer Spritzgießmaschine aufzunehmen.

13. Spritzgießmaschine nach einem der vorhergehenden Ansprüche, wobei die Entnahmeplatte Aufnahmehülsen aufweist..

14. Spritzgießmaschine mit einem Spritzgießwerkzeug nach einem der vorhergehenden Ansprüche, **dadurch gekennzeichnet, dass** die Spritzgießmaschine vier Holme aufweist, welche auf vier Eckpunkten eines Rechteckes angeordnet sind, und die Handhabungselemente zwischen den vier Holmen angeordnet sind, und wobei besonders bevorzugt

   i) die lichte Breite zwischen zwei Holmen, die auf benachbarten Eckpunkten des Rechteckes angeordnet sind, weniger als 1000 mm beträgt und auf sowohl der Kernplatte als auch der Kavitätenplatte mindestens 136, vorzugsweise mindestens 144 Handhabungselemente angeordnet sind, oder

   ii) die lichte Breite zwischen zwei Holmen, die auf benachbarten Eckpunkten des Rechteckes angeordnet sind weniger als 800 mm beträgt und auf sowohl der Kernplatte als auch der Kavitätenplatte mindestens 120, vorzugsweise mindestens 128 Handhabungselemente angeordnet sind, oder

   iii) die lichte Breite zwischen zwei Holmen, die auf benachbarten Eckpunkten des Rechteckes angeordnet sind weniger als 750 mm beträgt und auf sowohl der Kernplatte als auch der Kavitätenplatte mindestens 88, vorzugsweise mindestens 96 Handhabungselemente angeordnet sind.

Fig. 1

EP 4 477 396 A2

Fig. 2

11

Fig. 3

11

12

14

13

Fig. 4

Fig. 5

Fig. 6